# EUROPEAN PATENT SPECIFICATION

(11) **EP 3 698 902 B1**
(45) Date of publication and mention of the grant of the patent: **13.07.2022**
(21) Application number: 17811342.9
(22) Date of filing: 19.10.2017
(51) Int. Cl.: B22F 7/00, B22F 7/08, B22F 10/25, B22F 10/64, B22F 10/66, B23K 26/34, B23K 26/342, B32B 15/01, B33Y 10/00, B33Y 40/20, B33Y 70/00, B33Y 80/00, C21D 6/04, C22C 33/02, C22C 38/00, C22C 38/02, C22C 38/04, C22C 38/44, C22C 38/46, C21D 6/00

(54) **IMPROVED METHOD FOR MANUFACTURING A SHAPING TOOL**
VERBESSERTES VERFAHREN ZUR HERSTELLUNG EINES FORMWERKZEUGES
PROCÉDÉ AMÉLIORÉ DE FABRICATION D'UN OUTIL DE FORMAGE

(43) Date of publication of application: 26.08.2020
(73) Proprietor: Fundación Azterlan, 48200 Durango, Vizcaya (ES); Fundación Tekniker, 20600 Eibar (Guipuzkoa) (ES)
(72) Inventor: ARTOLA, Garikoitz, 48200 Durango (Vizcaya) (ES); MURO, Maider, 48200 Durango (Vizcaya) (ES); SORIANO REYES, Carlos, 20600 Eibar (ES); LEUNDA ARRIZABALAGA, Josu, 20600 Eibar (ES)
(74) Representative: Balder IP Law, S.L.
(86) International application number: PCT/ES2017/070698
(87) International publication number: WO 2019/077171

(56) References cited:
- CN-B- 105 886 923
- US-A1- 2009 208 773
- US-A1- 2013 068 449
- US-A1- 2016 340 762
- US-A1- 2017 130 285

## Description

### FIELD OF THE INVENTION

The present invention is related to an improved process for manufacturing a forming tool with increased hardness and high wear resistance.

### BACKGROUND OF THE INVENTION

Forming tools for deformation processes, such as forging, rolling, powder pressing (powder metallurgy), coining or stamping are usually manufactured in steel grades known as "tool steels". "Tool steels" are versatile materials that are well-adapted for manufacturing tools for use in deformation processes. Tool steels can reach a particularly high hardness when they are heat treated in order to resist wear damage and are available for several grades, adapted to specific applications, such as punching, dies or cutting.

The regular manufacturing route to produce forming tools is to carry out first a rough machining of a tool steel in state of supply, in low hardness conditions (annealed) until a geometry is achieved, which is close to the desired final geometry of the forming tool to be obtained. Secondly a hardening heat treatment is applied (by quench and tempering or by solution annealing and hardening) so that the high working hardness of the tool is achieved; and finally the tool steel is mechanized until the final geometry of the forming tool is achieved. That is, conventionally, it is necessary to carry out a finish machining operation of the forming tool after the hardening heat treatment, due to the distortions and surface oxidation that occur during the heat treatment.

At the level of the microstructural characteristics, some specific tool steels retain some austenite after quench and tempering, and to transform this retained austenite into martensite several tempering treatments and/or cryogenic treatments can be carried out. Usually these treatments are applied to the whole of the forming tool since they show retained austenite in all their volume. The microstructural change caused during the heat treatment induces significant dimensional distortions since the volume occupied by the martensitic microstructure is slightly larger than that of the austenite which it replaces. To correct the volumetric distortions caused during heat treatment and achieve the final desired dimensions of the forming tool, very expensive finish machining operations are needed.

The chip removal finish machining operations of high hardness materials, such as tool steels, are very demanding processes in terms of cutting conditions, due to the high friction and cutting forces involved. Dimensional accuracy is also difficult to achieve since the elastic deformations generated during machining must be properly handled. In general, as the material hardness increases, the machining costs increase as consequence of the strategies to compensate the stresses, the wear and the deformations involved during the chip removal finish machining operations. Several methods have been described for manufacturing high hardness materials. For instance, US 2017/0130285 A1 describes to a method of processing a metal component, including laser cladding at least one surface of a metal component to obtain a laser cladded metal component having a predefined hardness. The method further includes heat-treating the laser cladded metal component to reduce the predefined hardness of the laser cladded metal component for performing metal working operations thereon and cryogenically hardening the laser cladded material.

In view of the state of the art there is the need of providing an alternative process for manufacturing high hardness forming tools which overcomes at least part of the disadvantages above mentioned.

### DETAILED DESCRIPTION OF THE INVENTION

The present inventors have now discovered that it is possible to manufacture a forming tool according to an alternative process which significantly reduces or even avoids, surface oxidation and large deformations of the forming tool, reducing the intensity of the finish machining operation and allowing the use of cheaper base steels for the tool steel. An additional advantage of this novel process is the overall lowering of the manufacturing costs.

The process, hereinafter referred to as the process of the invention comprises the following steps as defined in the claims:
a) Providing a base steel for the forming tool
b) Depositing by laser cladding a clad steel onto at least part of the surface of the base steel for the forming tool, obtaining a cladded piece with presence of retained austenite in the coating, wherein the clad steel presents a chemical composition suitable to promote austenite retention and the coating obtained by deposition by laser cladding presents between 2% and 18% in volume of retained austenite
c) Carrying out a finish machining operation of the piece obtained in previous step b),
d) Applying a cryogenic treatment to the piece obtained in previous step c), obtaining a forming tool, wherein the cryogenic treatment is carried out at a temperature equal or lower than -150 °C.

The base steel for the forming tool provided in step a) is obtained by rough machining a base steel for the forming tool in state of supply or delivery, until a geometry is achieved close to the desired final geometry of the forming tool to be manufactured. The base steels for the forming tool which can be used are well known materials; they can be of ferritic, perlitic, bainitic, martensitic nature or a mixture thereof.

According to a particular embodiment the base steel for the forming tool is the standard DIN 1.2709, DIN 1.2379, DIN 1.7225, or DIN 1.0503.

The base steel for the forming tool provided in step a) has preferably a hardness equal or greater than 30 HRC. According to another preferred embodiment the base steel for the forming tool has a hardness equal or lower than 52 HRC. In a particular embodiment, the hardness is between 30 and 52 HRC. Illustrative examples of the hardness of the base steel for the forming tool are 31, 32, 33, 34, 35, 36, 37, 38, 39, 40, 41, 42, 43, 44, 45, 46, 47, 48, 49, 50, 51 HRC. In a further preferred embodiment, the hardness is between 44 and 46, more preferably 45 HRC.

The process of the invention comprises also providing a clad steel which chemical composition is selected to promote austenite retention in the coating obtained from the same in step b) of the process. The skilled person knows the chemical elements and their relative percentage in the composition which provide a coating with retained austenite, and there is no particular limitation about it. In a particular embodiment the clad steel chemical composition comprises: C (0.25-1.60%), Mn (<2.50%), Ni (0.50-5.00%), N (0.01-0.30%), in weight % in respect of the total weight of the composition, wherein Mn + Ni (<5.0%).

In a preferred embodiment the clad steel chemical composition comprises, in weight % in respect of the total weight of the composition:
C (0.25-1.60%), Mn (<2.50%), Ni (0.50-5.00%), N (0.01-0.30%), Si (<1.5 %), P (<0.02%), S (<0.01%), Cr (2.0-10.0%), Mo (0.10-3.0%), V (0.1-1.0%), Fe (balanced %) and unspecified other elements (each <0.1% and total <0.3%), wherein Mn + Ni (<5.0%).

In another preferred embodiment the clad steel chemical composition comprises in weight % in respect of the total weight of the composition:
C (0.25-0.8%), Mn (<1.0%), Ni (1.00-4.00%), N (0.01-0.30%), Si (<1.5%), P (<0.02%), S (<0.01%), Cr (2.0-8.0%), Mo (0.20-1.70%), V (0.5-1.0%), Fe (balanced %) and unspecified other elements (each <0.1% and total <0.3%), wherein Mn + Ni (<4.0%).

In a further preferred embodiment the clad steel chemical composition comprises the following: C (0.29-0.35%), Mn (0.20-0.4%), Ni (2.00-3.00%), N (0.01-0.1%), Si (<1.00%), P (<0.014%), S (<0.006%), Cr (6.5-7.5%), Mo (1.2-1.5%), V (0.5-1.0%), the rest Fe and unspecified other elements (each <0.1% and total <0.3%).

The process of the invention comprises depositing by laser cladding said clad steel with suitable chemical composition onto at least part of the surface of the base steel for the forming tool obtaining a cladded piece with presence of retained austenite in the coating. The depositing by laser cladding can be done on one or more areas of the surface of the base steel for the forming tool.

The content of retained austenite in the coating obtained in step b) is comprised according to the invention between 2% and 18% (in volume in respect of the total volume of the coating). In a particular embodiment the amount of retained austenite is between 2% and 10%. In another particular embodiment is between 2% and 8%, and preferably between 2% and 6%.

The coating obtained in b) has a thickness which may vary within a broad range. According to a particular embodiment the thickness is between 1 to 20 mm, preferably between 2 and 5 mm. According to another particular embodiment the thickness is between 1 and 15 mm. Further illustrative non-limiting examples of thicknesses are 3 mm, 4 mm, 6 mm, 7 mm, 8 mm, 9 mm and 10 mm.

The coating obtained in b) usually has a hardness which is higher than the hardness of the base steel for the forming tool. Usually the hardness is between 48 and 58 HRC, preferably between 50 and 54 HRC. In a particular embodiment the coating with retained austenite obtained in b) has a hardness between 50 and 57 HRC, for example, 51 HRC, or 52HRC, or 53 HRC or 56 HRC.

The presence of retained austenite is deliberately caused, presenting advantages in respect of the reduction of the risk of cracking of the coating carried out by lase cladding, since the austenite stands better the thermal stress caused by the laser cladding process, and the resulting hardness of the coating obtained in b) ranges between 48 and 58 HRC. Accordingly thereafter, the finish machining in soft condition step c) can be carried out, which results in an advantage for the finish machining process itself.

The finish machining step c) is performed in any conventional manner, such as milling and/or turning operations.

According to the invention, in step d) a cryogenic treatment is applied at a temperature equal or lower than -150°C, preferably lower than -160°C, and more preferably between -170 °C and -180 °C, so that the retained austenite is transformed into martensite. After this treatment the resulting coating achieves a final hardness which is usually comprised between 54 and 60 HRC. The amount of retained austenite is reduced in the resulting coating to a value comprised between 0 and 5%. In a particular embodiment the amount is reduced to a value between 0 and 3%, preferably between 0 and 2%, more preferably between 0 and 1%.

The process of the invention presents the advantage that the cryogenic treatment does not cause significant dimensional distortions of the tool, since the only dimensional relevant variations, due to the transformation of the retained austenite into martensite, affect at most the 18% of the microstructure of the coating of the cladded piece obtained in b).

Later, after the application of the cryogenic treatment it results advantageous to be able to avoid carrying out an additional step of finish machining of the forming tool.

The hardness of the coating of the forming tool obtained in step d) may be between 54 and 60 HRC, preferably between 56 and 60, more preferably 58 and 60, for example 59 HRC.

The forming tools that are obtained by a process of the invention are suitable for forging, rolling, powder pressing (powder metallurgy), coining or stamping processes. The forming tool of the invention is characterized in that the hardness of the coating obtained by laser cladding, and after the application of the cryogenic treatment, is greater than the hardness of the coating obtained by laser cladding without cryogenic treatment, and this value is greater than the one that the starting base steel for the forming tool presents.

The process and the forming tool of the present invention are illustrated below by means of reference examples which are presented only in an illustrative manner and it is not intended that they limit the present invention in any way.

### EXAMPLES

The clad steel that was used presented the following chemical composition: C-0.34%, Si-1.01%, Mn-0.23%, P-0.011%, S-0.005%, Cr-7.51%, Mo-1.44%, Ni-2.02%, V-0.94%, N-0.03%, Fe in balance.

### Example 1:

A standard steel DIN 1.7225 with a hardness of 34-38 HRC in quenched and tempered state was submitted to machining to generate a base steel for the forming tool. Thereafter, a coating of about 4 mm thickness, a hardness of 53 HRC and 8% of retained austenite was deposited by laser cladding onto the surface of the base steel. Then a finish machining by end milling was performed with a machining depth of about 1 mm.

After finish machining, a cryogenic treatment was applied in a cryogenic processing chamber during 19 hours with a minimum temperature of -175ºC (98K). Before removing the sample from the cryogenic chamber, the temperature was raised to 50ºC in order to avoid condensation humidity.

After the cryogenic treatment, the hardness of the cryogenized coating had increased up to 57 HRC. The content of retained austenite had dropped below 3% in example 1.

### Example 2:

A standard steel DIN 1.2709 age hardened, with a hardness of 49-50 HRC was submitted to rough machining to generate a base steel for the forming tool. Thereafter, a coating of about 4 mm thickness, a hardness of 53 HRC and 8% of retained austenite was deposited by laser cladding onto the surface of the base steel.

A conventional finish machining by end milling was performed with a machining depth of about 1 mm was performed.

After the finish machining, a cryogenic treatment is applied in a cryogenic processing chamber during 19 hours with a minimum temperature of -175ºC (98K). Before removing the sample from the processing chamber, the temperature was raised to 50ºC in order to avoid condensation humidity.

After the cryogenic treatment, the hardness of the cryogenized coating had increased up to 57 HRC. The content of retained austenite had dropped below 3% in example 2.

These examples showed that the cryogenic treatment triggered the transformation of the retained austenite in martensite, increasing the hardness of the cryogenized coating of the forming tool

## Claims

1. A process for the manufacturing of a forming tool which comprises the following steps:
a) Providing a base steel for the forming tool;
b) Depositing by laser cladding a clad steel onto at least part of the surface of the base steel for the forming tool, obtaining a cladded piece with presence of retained austenite in the coating, wherein the clad steel presents a chemical composition suitable to promote austenite retention and the coating obtained by deposition by laser cladding presents between 2% and 18% in volume of retained austenite,
c) Carrying out a finish machining operation of the piece obtained in previous step b),
d) Applying a cryogenic treatment to the piece obtained in previous step c);
wherein the cryogenic treatment is carried out at a temperature equal or lower than -150 °C.

2. Process according to claim 1, wherein the base steel for the forming tool provided in step a) has hardness equal or superior to 30 HRC.

3. Process according to claim 1 or 2, wherein the clad steel chemical composition comprises, in weight % in respect of the total weight of the composition:
C (0.25-1.60%), Mn (<2.50%), Ni (0.50-5.00%), N (0.01-0.30%), Si (<1.5 %), P (<0.02%), S (<0.01%), Cr (2.0-10.0%), Mo (0.10-3.0%), V (0.1-1.0%), Fe (balanced %) and unspecified other elements (each <0.1% and total <0.3%), wherein Mn + Ni (<5.0%).

4. Process according to claim 3, wherein the clad steel chemical composition comprises in weight % in respect of the total weight of the composition:
C (0.25-0.8%), Mn (<1.0%), Ni (1.00-4.00%), N (0.01-0.30%), Si (<1.5%), P (<0.02%), S (<0.01%), Cr (2.0-8.0%), Mo (0.20-1.70%), V (0.5-1.0%), Fe (balanced %) and unspecified other elements (each <0.1% and total <0.3%), wherein Mn + Ni (<4.0%).

5. Process according to claim 4, wherein the clad steel chemical composition comprises the following: C (0.29-0.35%), Mn (0.20-0.4%), Ni (2.00-3.00%), N (0.01-0.1%), Si (<1.00%), P (<0.014%), S (<0.006%), Cr (6.5-7.5%), Mo (1.2-1.5%), V (0.5-1.0%), the rest Fe and unspecified other elements (each <0.1% and total <0.3%).

6. Process according to any one of claims 1 to 5, wherein the coating obtained by deposition by laser cladding presents between 2% and 6% in volume of retained austenite.

7. Process according to claim 6, wherein the coating obtained by deposition by laser cladding presents a thickness between 1 to 20 mm and preferably between 2 and 5 mm.

8. Process according to claim 6 or 7, wherein the coating obtained by deposition by laser cladding presents a hardness between 48 to 58, and preferably 50 to 54 HRC.

9. Process according to any one of claims 1 to 8, wherein the finish machining operation is milling and/or turning.

10. Process according to any one of claims 1 to 9, wherein the coating of the forming tool obtained in step d) has a hardness between 54 to 60 HRC.

11. Process according to claim 10, wherein the coating of the forming tool obtained in step d) presents an amount of retained austenite between 0 to 5% and preferably between 0 to 1%.

## Patentansprüche

1. Verfahren zur Herstellung eines Formwerkzeugs, das die folgenden Schritte umfasst:
a) Bereitstellen eines Grundstahls für das Formwerkzeug;
b) Aufbringen eines plattierten Stahls durch Laserauftragschweißen auf mindestens einen Teil der Oberfläche des Basisstahls für das Formwerkzeug, wobei ein plattiertes Stück mit Restaustenit in der Beschichtung erhalten wird, wobei der plattierte Stahl eine chemische Zusammensetzung aufweist, die geeignet ist, die Austenitretention zu fördern, und die Beschichtung, die durch Aufbringen durch Laserauftragschweißen erhalten wird, zwischen 2 % und 18 % Volumenanteil an Restaustenit aufweist,
c) Ausführen einer Endbearbeitung des im vorherigen Schritt b) erhaltenen Stücks,
d) Anwenden einer Tieftemperaturbehandlung auf das im vorherigen Schritt c) erhaltene Stück;
wobei die Tieftemperaturbehandlung bei einer Temperatur gleich oder niedriger als -150°C ausgeführt wird.

2. Verfahren nach Anspruch 1, wobei der Basisstahl für das in Schritt a) bereitgestellte Formwerkzeug eine Härte von 30 HRC oder mehr aufweist.

3. Verfahren nach Anspruch 1 oder 2, wobei die chemische Zusammensetzung des plattierten Stahls in Gewichtsprozent, bezogen auf das Gesamtgewicht der Zusammensetzung, umfasst:
C (0,25-1,60 %), Mn (<2,50 %), Ni (0,50-5,00 %), N (0,01-0,30 %), Si (<1,5 %), P (<0,02 %), S (<0,01 %), Cr (2,0-10,0 %), Mo (0,10-3,0 %), V (0,1-1,0 %), Fe (ausgeglichene %) und nicht spezifizierte andere Elemente (jeweils <0,1% und insgesamt <0,3%), wobei Mn + Ni (<5,0%).

4. Verfahren nach Anspruch 3, wobei die chemische Zusammensetzung des plattierten Stahls in Gew.-%, bezogen auf das Gesamtgewicht der Zusammensetzung, umfasst:
C (0,25-0,8 %), Mn (<1,0 %), Ni (1,00-4,00 %), N (0,01-0,30 %), Si (<1,5 %), P (<0,02 %), S (<0,01 %), Cr (2,0-8,0 %), Mo (0,20-1,70 %), V (0,5-1,0 %), Fe (ausgeglichene %) und nicht spezifizierte andere Elemente (jeweils <0,1% und insgesamt <0,3%), wobei Mn + Ni (<4,0%).

5. Verfahren nach Anspruch 4, wobei die chemische Zusammensetzung des plattierten Stahls Folgendes umfasst: C (0,29-0,35%), Mn (0,20-0,4%), Ni (2,00-3,00%), N (0,01-0,1%), Si (<1,00%), P (<0,014%), S (<0,006%), Cr (6,5-7,5%), Mo (1,2-1,5%), V (0,5-1,0%), Rest Fe und nicht spezifizierte andere Elemente (jeweils <0,1% und insgesamt <0,3%).

6. Verfahren nach einem der Ansprüche 1 bis 5, **dadurch gekennzeichnet, dass** die durch Abscheidung durch Laserauftragschweißen erhaltene Beschichtung zwischen 2 % und 6 % des Volumens an Restaustenit aufweist.

7. Verfahren nach Anspruch 6, wobei die durch Laserauftragschweißen erhaltene Beschichtung eine Dicke zwischen 1 und 20 mm und vorzugsweise zwischen 2 und 5 mm aufweist.

8. Verfahren nach Anspruch 6 oder 7, wobei die durch Laserauftragschweißen erhaltene Beschichtung eine Härte von 48 bis 58, vorzugsweise 50 bis 54 HRC aufweist.

9. Verfahren nach einem der Ansprüche 1 bis 8, wobei die Endbearbeitung Fräsen und/oder Drehen ist.

10. Verfahren nach einem der Ansprüche 1 bis 9, wobei die in Schritt d) erhaltene Beschichtung des Formwerkzeugs eine Härte zwischen 54 und 60 HRC aufweist.

11. Verfahren nach Anspruch 10, wobei die Beschichtung des in Schritt d) erhaltenen Formwerkzeugs einen Anteil an Restaustenit zwischen 0 und 5 % und vorzugsweise zwischen 0 und 1 % aufweist.

## Revendications

1. Procédé pour la fabrication d'un outil de formage qui comprend les étapes suivantes :
a) fournir un acier de base pour l'outil de formage ;
b) déposer par placage au laser un acier plaqué sur au moins une partie de la surface de l'acier de base pour l'outil de formage, en obtenant une pièce plaquée avec présence dans le revêtement d'austénite retenue, l'acier plaqué présentant une composition chimique appropriée pour favoriser la rétention d'austénite, et le revêtement obtenu par dépôt par placage au laser présentant entre 2 % et 18 % en volume d'austénite retenue,
c) effectuer une opération d'usinage de finition de la pièce obtenue à l'étape b) précédente,
d) appliquer un traitement cryogénique à la pièce obtenue à l'étape c) précédente ;
le traitement cryogénique étant effectué à une température égale ou inférieure à -150 °C.

2. Procédé selon la revendication 1, dans lequel l'acier de base pour l'outil de formage fourni à l'étape a) a une dureté égale ou supérieure à 30 HRC.

3. Procédé selon la revendication 1 ou 2, dans lequel la composition chimique de l'acier plaqué comprend, en % en poids par rapport au poids total de la composition :
C (0,25-1,60 %), Mn (<2,50 %), Ni (0,50-5,00 %), N (0,01-0,30 %), Si (< 1,5 %), P (< 0,02 %), S (< 0,01 %), Cr (2,0-10,0 %), Mo (0.10-3,0 %), V (0,1-1,0 %), Fe (% pondéré) et autres éléments non spécifiés (chacun < 0,1 % et total < 0,3 %), avec Mn + Ni (< 5,0 %).

4. Procédé selon la revendication 3, dans lequel la composition chimique de l'acier plaqué comprend, en % en poids par rapport au poids total de la composition :
C (0,25-0,8 %), Mn (< 1,0 %), Ni (1,00-4,00 %), N (0,01-0,30 %), Si (< 1,5 %), P (< 0,02 %), S (< 0,01 %), Cr (2,0-8,0 %), Mo (0,20-1,70 %), V (0,5-1,0 %), Fe (% pondéré) et autres éléments non spécifiés (chacun < 0,1 % et total < 0,3 %), avec Mn + Ni (< 4,0 %).

5. Procédé selon la revendication 4, dans lequel la composition chimique de l'acier plaqué comprend les éléments suivants : C (0,29-0,35 %), Mn (0,20-0,4 %), Ni (2,00-3,00 %), N (0,01-0,1 %), Si (< 1,00 %), P (< 0,014 %), S (< 0,006 %), Cr (6,5-7,5 %), Mo (1,2-1,5 %), V (0,5-1,0 %), le reste étant du Fe et d'autres éléments non spécifiés (chacun < 0,1 % et total < 0,3 %).

6. Procédé selon l'une quelconque des revendications 1 à 5, dans lequel le revêtement obtenu par dépôt par placage au laser présente entre 2 % et 6 % en volume d'austénite retenue.

7. Procédé selon la revendication 6, dans lequel le revêtement obtenu par dépôt par placage au laser présente une épaisseur comprise entre 1 et 20 mm, et de préférence entre 2 et 5 mm.

8. Procédé selon la revendication 6 ou 7, dans lequel le revêtement obtenu par dépôt par placage au laser présente une dureté comprise entre 48 et 58, et de préférence entre 50 et 54 HRC.

9. Procédé selon l'une quelconque des revendications 1 à 8, dans lequel l'opération d'usinage de finition est une opération de fraisage et/ou de tournage.

10. Procédé selon l'une quelconque des revendications 1 à 9, dans lequel le revêtement de l'outil de formage obtenu à l'étape d) présente une dureté comprise entre 54 et 60 HRC.

11. Procédé selon la revendication 10, dans lequel le revêtement de l'outil de formage obtenu à l'étape d) présente une quantité d'austénite retenue comprise entre 0 et 5 %, et de préférence entre 0 et 1 %.
